# EUROPEAN PATENT APPLICATION

(11) **EP 1 940 108 A2**
(43) Date of publication of application: **02.07.2008**
(21) Application number: 07021319.4
(22) Date of filing: 31.10.2007
(51) Int. Cl.: H04L 29/06

(54) **Method and apparatus for handling protocol error in a wireless communications system**

(30) Priority: 31.10.2006 US 863800 P
(71) Applicant: Innovative Sonic Limited, Tortola (VG)
(72) Inventor: Jiang, Sam Shiaw-Shiang, Taipei City (TW)
(74) Representative: Weber, Joachim

(57) **Abstract**

A method for handling protocol errors in a wireless communications system includes establishing a first signaling radio bearer and triggering an integrity protection procedure of the first signaling radio bearer (302), receiving a first message on the first signaling radio bearer (304), and neglecting the first message and initiating a synchronization procedure to synchronize a ciphering parameter when a predefined condition is met (306).

## Description

This application claims the benefit of U.S. Provisional Application No. 60/863,800, filed on October 31, 2006 and entitled "HFN de-synchronization detection with Integrity Protection scheme in a wireless communications system", the contents of which are incorporated herein by reference.

The present invention relates to a method and apparatus for handling protocol error in a wireless communications system according to the pre-characterizing clauses of claims 1, 8, 15 and 19.

The third generation (3G) mobile communications system has adopted a Wideband Code Division Multiple Access (WCDMA) wireless air interface access method for a cellular network. WCDMA can provide high frequency spectrum utilization, universal coverage, and high quality, high speed multimedia data transmission. The WCDMA method also meets all kinds of QoS requirements simultaneously, providing diverse flexible two-way transmission services and better communication quality to reduce transmission interruption rates.

In order to protect user data and signaling information from being intercepted by unauthorized devices, the prior art 3G mobile communications system can trigger Integrity Protection (IP) and Ciphering. IP is utilized for protecting Radio Resource Control (RRC) messages transmitted on Signalling Radio Bearers (SRBs), while Ciphering is utilized for protecting Radio Link Control Protocol Data Units (RLC PDU) transmitted on Dedicated Channels.

Radio Bearers (RBs) are "logical" data communication exchange channels, and are utilized for providing data transmission exchange to the user or for providing RRC layer control signal transmission exchange. SRBs are the RBs specifically used for transmitting RRC messages, and utilized for completing various RRC control processes, such as RRC Connection Management Procedures, RB Control Procedures, RRC Connection Mobility Procedures, and Measurement Procedures. Therefore, the messages sent on SRB are sporadic.

Moreover, take an RRC communications protocol specification established by the 3GPP for example, after the IP procedure is activated, every time the User Equipment (UE) or the network transmits signaling message, the UE or the network will add a Message Authentication Code for data Integrity (MAC-I), whose content is different for each signaling message. A legal UE or network can authenticate the accuracy of the MAC-I, and thereby accept the received signaling message when the expected MAC-I and the received MAC-I are the same or act as if the message was not received when the calculated expected MAC-I and the received MAC-I differ, i.e. when the IP check fails.

Furthermore, the Ciphering procedure calculates keystream data through a Ciphering Algorithm, then the transmitter encrypts plain-text data with the keystream data to generate cipher-text data, and the receiver can decipher the received cipher-text data with keystream data the same as the keystream data used in the transmitter, so as to obtain the plain-text data. The Ciphering Algorithm uses multiple parameters, including a Ciphering Sequence Number (Ciphering SN) composed of a 20-bit RLC HFN (Radio Link Control Hyper Frame Number) and a 12-bit RLC SN.

SN is embedded in a header of a packet, while HFN is maintained in both the transmitter and the receiver. HFN is similar to a carrying number of SN. Each time SN wraps around its maximum representing value back to 0, HFN is incremented by one in the transmitter and in the receiver. For example, if SN is represented by 7 bits, which counts from 0 to 127, once SN is beyond 127, HFN is incremented by 1, and SN restarts from 0. As a result, according to SN, the transmitter and the receiver can timely increment HFN, so as to keep synchronization of HFN and maintain ciphering and deciphering processes.

In some situations, HFN between the transmitter and the receiver may be out of synchronization, causing failure in the ciphering and deciphering processes. In order to recover HFN out of synchronization errors, the RLC entity can execute a reset procedure. Take an RLC communications protocol specification established by the 3GPP for example, when the RLC entity of the transmitter detects any one of three conditions, the reset procedure is executed. One of the three conditions is:
"No discard after MaxDAT number of transmissions" mode is configured, and the variable VT(DAT) is equal to the parameter MaxDAT, and then the RLC reset procedure will be executed.

The "No discard after MaxDAT number of transmissions" mode means that if the number of times a PDU is scheduled for transmission, i.e. VT(DAT), reaches the parameter MaxDAT, the transmitter will discard an SDU corresponding to one or more SDU segments carried by the PDU or an SDU corresponding to a length indicator field used to indicate an end position of one or more SDUs, and explicit signaling is used to notify the receiver.

Therefore, when "No_Discard after MaxDAT number of transmissions" mode is configured and VT(DAT) reaches the parameter MaxDAT, the RLC reset procedure is triggered. After the reset procedure is complete, HFNs are synchronized between the transmitter and the receiver. In other words, if the RLC entity of the transmitter detects the HFN out of synchronization error, the transmitter can trigger the RLC reset procedure, so as to synchronize the HFNs between the transmitter and the receiver. However, the RLC HFN de-synchronization detection rate depends on the AMD (Acknowledgment Mode Data) PDU sizes, and that is, HFN de-synchronization is not 100% detectable by the RLC entity. For example, suppose that the HFN de-synchronization detection rate is 30% by the RLC entity, then 70% AMD PDUs deciphered with wrong HFN will not be detected as containing illegal values in various fields of the AMD PDU, and will be positively acknowledged and delivered to the upper layer, RRC. In addition, the RRC entity can perform the IP procedure for the received RRC message sent on SRB, and act as if the message was not received when the IP check fails. However, since RRC messages sent on SRB are sporadic, after the RLC PDUs deciphered with wrong HFN are sent to the RRC entity, only few of the RLC PDUs (sent on SRBs) deciphered with wrong HFN can be detected as containing illegal values through the IP procedure. In such a situation, it takes quite a while for the RLC entity to detect the HFN de-synchronization error. The recovery of the HFN de-synchronization error is delayed. Consequently, the transmission of correct RRC messages will be delayed, and the transmission efficiency is decreased.

In short, the prior art cannot effectively handle the HFN de-synchronization error, which decreases the transmission efficiency, and wastes system recourse.

This in mind, the present invention aims at providing a method and apparatus for handling protocol error in a wireless communications system, for quickly recovering protocol errors and timely transmitting accurate RRC messages when a predefined condition is met.

This is achieved by a method and apparatus for handling protocol error in a wireless communications system according to claims 1, 8, 15 and 19. The dependent claims pertain to corresponding further developments and improvements.

As will be seen more clearly from the detailed description following below, the claimed method for handling protocol errors in a wireless communications system comprises establishing a first signaling radio bearer and triggering an integrity protection procedure of the first signaling radio bearer, receiving a first message on the first signaling radio bearer, and neglecting the first message and initiating a synchronization procedure to synchronize a ciphering parameter when a predefined condition is met.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to an embodiment of the present invention.
Fig. 4 is a flowchart of a process according to another embodiment of the present invention.

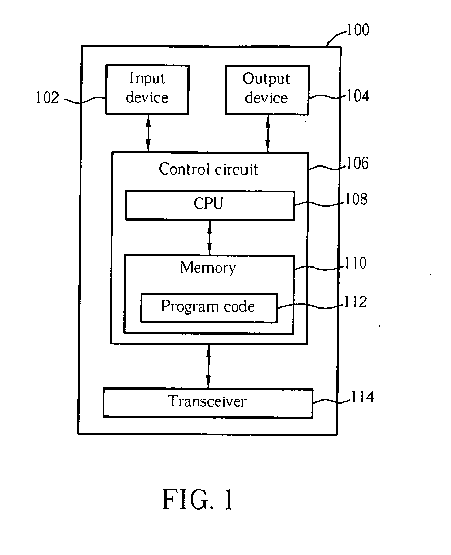

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

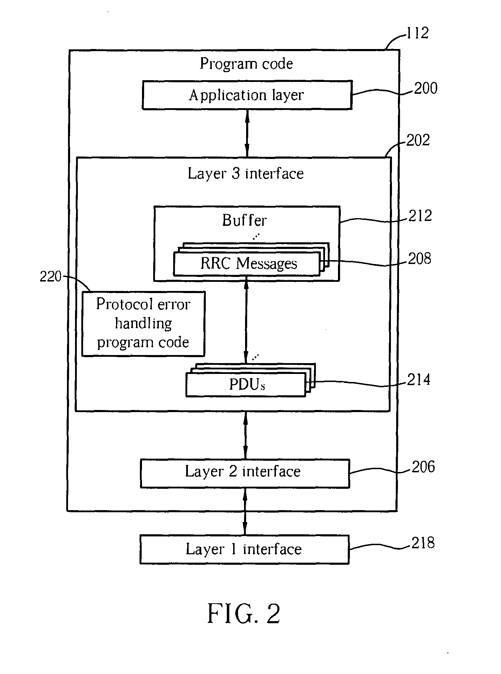

Please continue to refer to Fig. 2. Fig. 2 is a diagram of the program code 112 shown in Fig. 1. The program code 112 comprises an application layer 200, a Layer 3 interface 202, and a Layer 2 interface 206, and is coupled to a Layer 1 interface 218. The Layer 3 interface 202 comprises a buffer for storing an RRC message 208, and for forming an RRC PDU 214 according to the RRC message 208. The application layer 200 provides control signals required by necessary procedures, which can be outputted by attaching the control signals to RRC PDUs 214 for setting, modifying, or releasing the Layer 2 interface 206 and the Layer 1 interface 218, to establish, modify, or cancel data exchange channels.

As mentioned above, HFNs between the transmitter and the receiver may be out of synchronization, causing failure in the ciphering and deciphering processes. In such a situation, the embodiment of the present invention provides a protocol error handling program code 220, for timely triggering the reset procedure, and recovering the HFN out of synchronization error.

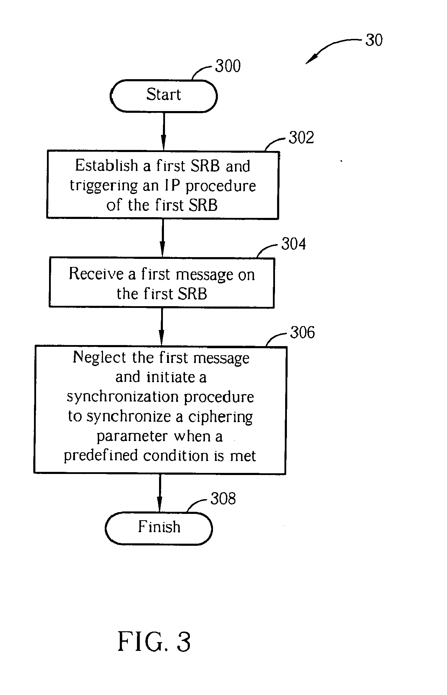

Please refer to Fig. 3, which illustrates a diagram of a process 30 according to an embodiment of the present invention. The process 30 is utilized for handling protocol errors in a wireless communications system, and can be compiled into the protocol error handling program code 220. The process 30 comprises the following steps:
Step 300: Start.
Step 302: Establish a first SRB and triggering an IP procedure of the first SRB.
Step 304: Receive a first message on the first SRB.
Step 306: Neglect the first message and initiate a synchronization procedure to synchronize a ciphering parameter when a predefined condition is met.
Step 308: Finish.

According to the process 30, after an SRB is established and an IP procedure of the SRB is triggered, if a predefined condition is met, the embodiment of the present invention acts as if the message was not received and initiates a synchronization procedure to synchronize a ciphering parameter, which is preferably an HFN. The predefined condition is preferably when an integrity check for the first message on the first signaling radio bearer fails. Furthermore, the predefined condition is preferably when the deciphered first message contains at least a field with invalid value.

Therefore, via the process 30, the embodiment of the present invention neglects RRC messages corresponding to PDUs deciphered with wrong HFN, and triggers the HFN synchronization procedure, to recover the protocol error. The HFN synchronization procedure can be achieved by a reset procedure, that is, informing the RLC entity to initiate a reset procedure, or by sending a message indicating an HFN value on another SRB to update HFN.

In the prior art, after the RLC PDUs deciphered with wrong HFN are sent to the RRC entity, only few of the RLC PDUs deciphered with wrong HFN can be detected. In such a situation, it takes quite a while for the RLC entity to recover the HFN de-synchronization error, causing transmission delay and efficiency degradation. In comparison, in the embodiment of the present invention, when an integrity check for a message sent fails or when a deciphered message contains at least a field with invalid value, the RRC entity acts as if the message was not received, and triggers the HFN synchronization procedure, such as the reset procedure or the HFN update procedure. Therefore, when the HFN is out of synchronization, the embodiment of the present invention can quickly recover the error, and timely transmit accurate RRC messages, so as to enhance transmission efficiency.

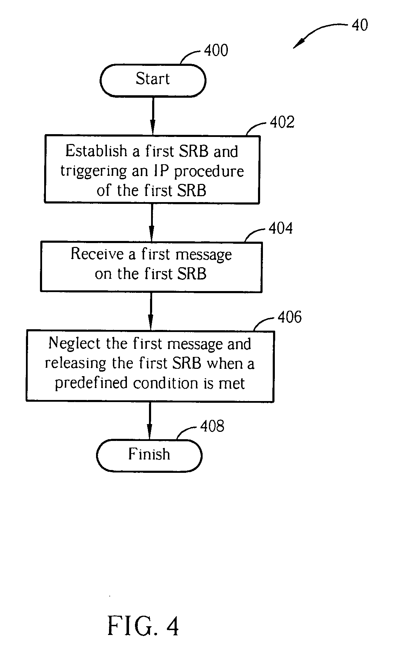

Please refer to Fig. 4, which illustrates a diagram of a process 40 according to an embodiment of the present invention. The process 40 is utilized for handling protocol errors in a wireless communications system, and can be compiled into the protocol error handling program code 220. The process 40 comprises the following steps:
Step 400: Start.
Step 402: Establish a first SRB and triggering an IP procedure of the first SRB.
Step 404: Receive a first message on the first SRB.
Step 406: Neglect the first message and releasing the first SRB when a predefined condition is met.
Step 408: Finish.

According to the process 30, after an SRB is established and an IP procedure of the SRB is triggered, if a predefined condition is met, the embodiment of the present invention acts as if the message was not received and releases the SRB. Preferably, the embodiment of the present invention establishes another SRB to replace the SRB. The predefined condition is preferably when an integrity check for the first message on the first signaling radio bearer fails. Furthermore, the predefined condition is preferably when the deciphered first message contains at least a field with invalid value.

Therefore, via the process 40, the embodiment of the present invention neglects RRC messages corresponding to PDUs deciphered with wrong HFN, releases the SRBs corresponding to the RRC messages, and establishes another SRB for substitute, to timely recover the protocol error.

In the prior art, after the RLC PDUs deciphered with wrong HFN are sent to the RRC entity, only few of the RLC PDUs deciphered with wrong HFN can be detected. In such a situation, it takes quite a while for the RLC entity to recover the HFN de-synchronization error, causing transmission delay and efficiency degradation. In comparison, when an integrity check for a message sent fails or when a deciphered message contains at least a field with invalid value, the embodiment of the present invention neglects the message, releases the SRB sending the message, and establishes another SRB for substitute, so as to timely recover the protocol error. Therefore, when the HFN is out of synchronization, the embodiment of the present invention can quickly recover the error, and timely transmit accurate RRC messages, so as to enhance transmission efficiency.

In summary, when the integrity check of the RRC message fails, the embodiment of the present invention can quickly recover protocol error, and timely transmit accurate RRC messages, so as to enhance transmission efficiency.

## Claims

1. A method for handling protocol errors in a wireless communications system comprising:
establishing a first signaling radio bearer and triggering an integrity protection procedure of the first signaling radio bearer (302); and
receiving a first message on the first signaling radio bearer (304);
**characterized by** neglecting the first message and initiating a synchronization procedure to synchronize a ciphering parameter when a predefined condition is met (306).

2. The method of claim 1, **characterized in that** the predefined condition is when an integrity check for the first message on the first signaling radio bearer fails.

3. The method of claim 1, **characterized in that** the predefined condition is when the deciphered first message contains at least a field with invalid value.

4. The method of claim 1, **characterized in that** the ciphering parameter is a hyper frame number.

5. The method of claim 1, **characterized in that** initiating the synchronization procedure to synchronize the ciphering parameter (306) is informing initialization of a reset procedure for initiating the synchronization procedure of the ciphering parameter.

6. The method of claim 1, **characterized in that** initiating the synchronization procedure to synchronize the ciphering parameter (306) is transmitting a second message for updating the ciphering parameter.

7. The method of claim 6, **characterized in that** the second message is sent on a second signaling radio bearer.

8. A communications device (100) of a wireless communications system utilized for accurately handling protocol errors comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
establishing a first signaling radio bearer and triggering an integrity protection procedure of the first signaling radio bearer (302); and
receiving a first message on the first signaling radio bearer (304);
**characterized in that** the program code (112) further comprises
neglecting the first message and initiating a synchronization procedure to synchronize a ciphering parameter when a predefined condition is met (306).

9. The communications device of claim 8, **characterized in that** the predefined condition is when an integrity check for the first message on the first signaling radio bearer fails.

10. The communications device of claim 8, **characterized in that** the predefined condition is when the deciphered first message contains at least a field with invalid value.

11. The communications device of claim 8, **characterized in that** the ciphering parameter is a hyper frame number.

12. The communications device of claim 8, **characterized in that** initiating the synchronization procedure to synchronize the ciphering parameter (306) is informing initialization of a reset procedure for initiating the synchronization procedure of the ciphering parameter.

13. The communications device of claim 8, **characterized in that** initiating the synchronization procedure to synchronize the ciphering parameter (306) is transmitting a second message for updating the ciphering parameter.

14. The communications device of claim 13, **characterized in that** the second message is sent on a second signaling radio bearer.

15. A method for handling protocol errors in a wireless communications system comprising:
establishing a first signaling radio bearer and triggering an integrity protection procedure of the first signaling radio bearer (402); and
receiving a first message on the first signaling radio bearer (404);
**characterized by** neglecting the first message and releasing the first signaling radio bearer when a predefined condition is met (406).

16. The method of claim 15, **characterized in that** the predefined condition is when an integrity check for the first message on the first signaling radio bearer fails.

17. The method of claim 15, **characterized in that** the predefined condition is when the deciphered first message contains at least a field with invalid value.

18. The method of claim 15 further comprising establishing a second signaling radio bearer for replacing the first signalling radio bearer.

19. A communications device (100) of a wireless communications system utilized for accurately handling protocol errors comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
establishing a first signaling radio bearer and triggering an integrity protection procedure of the first signaling radio bearer (402); and
receiving a first message on the first signaling radio bearer (404);
**characterized in that** the program code (112) further comprises
neglecting the first message and releasing the first signaling radio bearer when a predefined condition is met (406).

20. The communications device of claim 19, **characterized in that** the predefined condition is when an integrity check for the first message on the first signaling radio bearer fails.

21. The communications device of claim 19, **characterized in that** the predefined condition is when the deciphered first message contains at least a field with invalid value.

22. The communications device of claim 19, **characterized in that** the program code further comprises establishing a second signaling radio bearer for replacing the first signalling radio bearer.
